# EUROPEAN PATENT APPLICATION

(11) **EP 2 858 187 A1**
(43) Date of publication of application: **08.04.2015**
(21) Application number: 13797432.5
(22) Date of filing: 19.03.2013
(51) Int. Cl.: H02B 1/40, H01M 10/44, H01M 10/48, H02J 7/34, H02J 9/00, H02J 9/06

(54) **STORAGE CELL SYSTEM**

(30) Priority: 01.06.2012 JP 2012125955
(71) Applicant: Toshiba Lighting & Technology Corporation, Yokosuka-shi, Kanagawa 237-8510 (JP)
(72) Inventor: MATSUURA Hiroshi, Yokosuka-shi, Kanagawa 237-8510 (JP)
(74) Representative: Bokinge, Ole
(86) International application number: PCT/JP2013/057774
(87) International publication number: WO 2013/179731

(57) **Abstract**

By voltage sensors (CT1, CT2, and CT3), a voltage is detected in a primary side electric path (22) of a protective instrument (16) of a distribution board (11) into which commercial AC electric power is input, and secondary side electric paths (23 and 24) of the protective instrument (16) to which a branch breaker (21) is connected, respectively. Electric power is able to be supplied to the distribution board (11) side from a storage battery (13). By a control unit (33), the electric power is supplied to the distribution board (11) side from the storage battery (13) on the basis of a voltage detection by the voltage sensors (CT1, CT2, and CT3) only when the voltage is not detected in the primary side electric path (22) of the protective instrument (16).

## Description

### TECHNICAL FIELD

An embodiment of the present invention relates to a storage battery system for supplying electric power to a distribution board side from a storage battery.

### BACKGROUND ART

In the related art, in a general residence, commercial AC electric power is supplied to an electric power supply location such as each room through a distribution board. The distribution board includes a protective instrument such as a limiter or a main breaker into which the commercial AC electric power is input, and a plurality of branch breakers connected to an output side of the protective instrument, and a load is connected to each of the branch breakers.

In addition, in order to secure the electric power at the time of a power failure of the commercial AC electric power, a technology in which electric power of solar power generation is used is proposed, but using the electric power of the solar power generation may be insufficient or difficult. Therefore, by using a storage battery, the electric power is supplied from the storage battery at the time of the power failure of the commercial AC electric power.

### CITATION LIST

### Patent Literature

[PTL 1] Japanese Patent No. 3570283

### SUMMERY OF INVENTION

### Technical Problem

As a factor causing the electric power not to be supplied into the residence, the electric power may be cut off by an operation of the protective instrument of the distribution board in addition to a case of the power failure of the commercial AC electric power. For example, when the electric power exceeds a contracted current with an electric power company, the limiter is operated to cut off the electric power, and when an electric leakage or the like occurs, the main breaker is operated to cut off the electric power.

For this reason, when the commercial AC electric power is not supplied into the residence, it may not be preferable to directly supply the electric power from the storage battery due to the factor causing the cutoff.

The invention is to provide a storage battery system which is able to suitably supply electric power according to a factor causing the cutoff to a distribution board side from a storage battery by specifying the factor causing the cutoff of the electric power.

### Solution to Problem

In a storage battery system of an embodiment, by a voltage detection unit, a voltage is detected in a primary side electric path of a protective instrument of a distribution board into which commercial AC electric power is input, and in a secondary side electric path of the protective instrument to which a branch breaker is connected, respectively. Electric power is able to be supplied to the distribution board side from a storage battery. By a control unit, the electric power is supplied to the distribution board side from the storage battery on the basis of a voltage detection by the voltage detection unit only when the voltage is not detected in the primary side electric path of the protective instrument.

### BRIEF DESCRIPTION OF DRAWINGS

Fig. 1 is a block diagram of a storage battery system illustrating an embodiment.
Fig. 2 is a flowchart in which a cutoff position is determined by the storage battery system.

### DESCRIPTION OF EMBODIMENTS

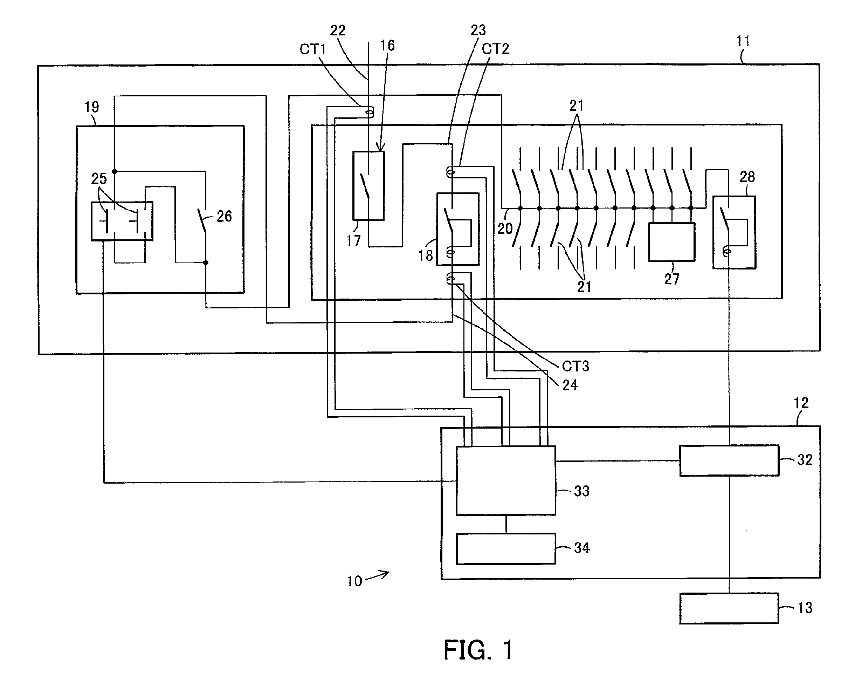

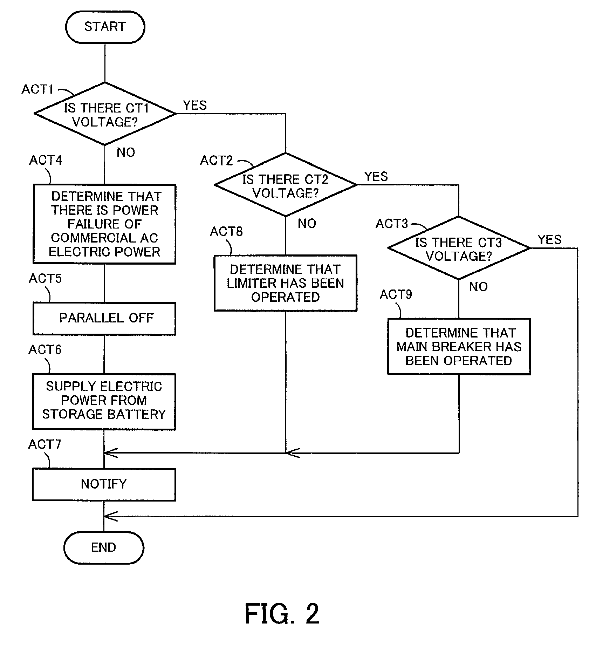

Hereinafter, an embodiment will be described with reference to Fig. 1 and Fig. 2.

In Fig. 1, a storage battery system 10 includes a distribution board 11, a power conditioner 12 as a charging and discharging device, a storage battery 13, and the like.

Then, the distribution board 11 includes a limiter 17 as a protective instrument 16, a main breaker 18, a switch unit 19, a conductive bar 20, a plurality of branch breakers 21, and the like.

The limiter 17 has a function of cutting off an electric path when a used current of a residence exceeds a contracted current with an electric power company. A primary side electric path 22 which is a power source line is connected to a primary side (an input side) of the limiter 17 from a wattmeter disposed outside a room, and commercial AC electric power is input to the primary side through the primary side electric path 22. A secondary side electric path 23 which is an electric wire connected to the main breaker 18 is connected to a secondary side (an output side) of the limiter 17.

The main breaker 18 has a function of cutting off the electric path when an electric leakage, a short circuit, an over current, and the like occur on a load side. The secondary side electric path 23 of the limiter 17 is connected to a primary side of the main breaker 18. A secondary side electric path 24 which is an electric wire connected to the switch unit 19 is connected to a secondary side of the main breaker 18.

The switch unit 19 switches between a connection and a cutoff of the electric path between the commercial AC power source side and the load side according to control by the power conditioner 12. The secondary side electric path 24 of the main breaker 18 is connected to a primary side of the switch unit 19, and the conductive bar 20 is connected to a secondary side of the switch unit 19. Between the primary side and the secondary side of the switch unit 19, a series circuit in which two electromagnetic switches 25 are connected in series and an inspection switch are connected in parallel. In general, the two electromagnetic switches 25 are turned ON by an electric power supply from the power conditioner 12, and when switching to an electric power supply from the storage battery 13, the electric power supply from the power conditioner 12 is stopped to be turned OFF. In general, the inspection switch 26 is turned OFF, and is turned ON by a manipulation of the inspection switch 26.

The plurality of branch breakers 21 is connected to the conductive bar 20, and the load is connected to each of the branch breakers 21.

A measurement unit 27 for measuring an amount of electric power used by the load connected to each of the branch breakers 21 is connected to the conductive bar 20.

Further, a power conditioner 12 is connected to the conductive bar 20 through a storage battery side breaker 28. The storage battery side breaker 28 has a function of cutting off the electric path when an electric leakage, a short circuit, an over current, and the like occur on the load side at the time of the electric power supply from the storage battery 13.

In addition, voltage sensors CT1, CT2, and CT3 as a voltage detection unit are mounted on the primary side electric path 22 of the limiter 17, the secondary side electric path 23 of the limiter 17, and the secondary side electric path 24 of the main breaker 18 in the distribution board 11 in order to detect a voltage thereof, respectively.

In addition, the power conditioner 12 includes a converter 32, a control unit 33, a notification unit 34, and the like.

The converter 32 switches between a charging and a discharge of the storage battery 13 according to control by the control unit 33, converts the commercial AC electric power supplied from the conductive bar 20 into direct current electric power to charge the storage battery 13 at the time of the charging, and converts the direct current electric power of the storage battery 13 into AC electric power to be supplied to the conductive bar 20 at the time of the discharge.

The converter 32, the voltage sensors CT1, CT2, and CT3, and the two electromagnetic switches 25 are connected to the control unit 33. The control unit 33 controls the charging and the discharge of the storage battery 13 by the converter 32, and has a function of controlling the electric power such that it is supplied to the distribution board 11 side from the storage battery 13 only when the voltage is not detected in the primary side electric path 22 of the limiter 17, of controlling the electric power such that it is not supplied to the distribution board 11 side from the storage battery 13 when the voltage is detected in the primary side electric path 22 of the limiter 17, and the voltage is not detected in the secondary side electric path 23 of the limiter 17 or the secondary side electric path 24 of the main breaker 18 on the basis of a voltage detection by the voltage sensors CT1, CT2, and CT3, and of notifying information by the notification unit 34, and the like. The information notified by the notification unit 34 includes details of a factor causing the cutoff of the electric power.

The notification unit 34 includes, for example, a display unit such as a segment display device and a liquid crystal display device, a sound generation unit for generation of sound and a warning sound, and the like, and the contents of the factor causing the cutoff of the electric power which is input from the control unit 33 or the like is able to be notified.

In addition, as the storage battery 13, for example, a lithium ion battery or the like is used, and for example, a storage capacity in which electric power is able to be supplied to the load in the residence during a power failure of a commercial AC power source for a predetermined period of time such as a planned power failure is secured.

Next, an operation of the storage battery system 10 will be described.

In a normal state where the commercial AC electric power is supplied from the electric power company, and the limiter 17 and the main breaker 18 have not been operated, the commercial AC electric power supplied from the electric power company is supplied to the load connected to each of the branch breakers 21 through the limiter 17, the main breaker 18, the electromagnetic switch 25 which is in an ON state of the switch unit 19, the conductive bar 20, and the branch breaker 21.

In the control unit 33 of the power conditioner 12, an amount of charge of the storage battery 13 is monitored, and when the amount of charge is below a predetermined value, the converter 32 is controlled such that it charges the storage battery 13. At the time of the charging, the commercial AC electric power supplied from the conductive bar 20 is converted into the direct current electric power to be supplied to the storage battery 13, and the storage battery 13 is charged. When the amount of charge of the storage battery 13 reaches the predetermined value, the conversion by the converter 32 is stopped, and the charging is completed.

Next, an operation of the power conditioner 12 will be described with reference to a flowchart of Fig. 2.

The control unit 33 of the power conditioner 12 monitors whether or not the voltage is detected by the voltage sensors CT1, CT2, and CT3 (ACTs 1 to 3). Furthermore, the voltage detection is determined in the order of the voltage sensor CT1, the voltage sensor CT2, and the voltage sensor CT3, and the voltage detection may be determined in the order of the voltage sensor CT3, the voltage sensor CT2, and the voltage sensor CT1.

In the normal state where the commercial AC electric power is supplied from the electric power company, and the limiter 17 and the main breaker 18 have not been operated, the voltage is detected by all the voltage sensors CT1, CT2, and CT3, and the control unit 33 determines a normal state and continues the monitoring.

In addition, at the time of the power failure in which the commercial AC electric power supply from the electric power company is stopped, the voltage is not detected by the voltage sensor CT1 on the primary side electric path 22 of the limiter 17, and thus the control unit 33 determines that there is the power failure of the commercial AC power source (ACT 4). Furthermore, in this case, the voltage is not detected by any of the voltage sensors CT1, CT2, and CT3, and thus the control unit 33 may determine that there is the power failure of the commercial AC power source under a condition where the voltage is not detected by any of the voltage sensors CT1, CT2, and CT3.

When the control unit 33 determines that there is the power failure of the commercial AC power source, the electromagnetic switch 25 of the switch unit 19 is turned OFF, and the commercial AC power source side and the load side are paralleled off between the main breaker 18 and the conductive bar 20 (the branch breaker 21) (ACT 5), and then the direct current electric power of the storage battery 13 is converted into the AC electric power by the converter 32 to be supplied to the load through the conductive bar 20 and the branch breaker 21 (ACT 6).

Accordingly, an electric device is able to be used in the residence during the power failure of the commercial AC power source.

Further, the control unit 33 controls the notification unit 34 such that it notifies that the power failure of the commercial AC power source occurs, a fact that the electric power is supplied from the storage battery 13, and the like (ACT 7). A resident confirms the notification, and thus is able to understand the fact that the power failure of the commercial AC power source occurs, the fact that the electric power is supplied from the storage battery 13, and the like.

In addition, the used current of the residence exceeds the contracted current with the electric power company, and the limiter 17 is operated, the commercial AC electric power is cut off by the limiter 17, and thus the electric device in the residence is not able to be used.

In this case, the voltage is detected by the voltage sensor CT1 on the primary side electric path 22 of the limiter 17, but the voltage is not detected by the voltage sensor CT2 on the secondary side electric path 23 of the limiter 17, and thus the control unit 33 determines that the limiter 17 has been operated (ACT 8). Furthermore, the voltage is not detected by the voltage sensors CT2, and CT3, and thus the control unit 33 may determine that the limiter 17 has been operated under a condition where the voltage is not detected by the voltage sensors CT2, and CT3.

When the control unit 33 determines that the limiter 17 has been operated, the electric power is not supplied to the distribution board 11 side from the storage battery 13, and in ACT 7, the notification unit 34 notifies that the limiter 17 has been operated, that is, too much electricity has been used.

The resident who confirms the factor causing the cutoff by the notification turns off a switch of the used electric device or pulls out the switch from an outlet, and then turns on a switch of the limiter 17 again. Accordingly, the commercial AC electric power supply is restored.

In addition, when the main breaker 18 is operated due to occurrence of an electric leakage, a short circuit, an over current, and the like on the load side, the commercial AC electric power is cut off by the main breaker 18, and the electric device in the residence is not able to be used.

In this case, the voltage is detected by the voltage sensor CT1 on the primary side electric path 22 and the voltage sensor CT2 on the secondary side electric path 23 of the limiter 17, and the voltage is not detected by the secondary side electric path 24 of the main breaker 18, and thus the control unit 33 determines that the main breaker 18 has been operated (ACT 9).

When the control unit 33 determines that the main breaker 18 has been operated, the electric power is not supplied to the distribution board 11 side from the storage battery 13, and in ACT 7, the notification unit 34 notifies that an electric leakage, a short circuit, an over current, and the like have occurred on the load side.

The resident who confirms the factor causing the cutoff by the notification inspects the electric device, and when there is an electric device having a problem, the resident disconnects the electric device from the outlet. The inspection of the electric device is completed, and when the problem is solved, the switch of the main breaker 18 is turned on again, and the commercial AC electric power supply is restored.

Thus, in the storage battery system 10, the factor causing the cutoff of the electric power is able to be specified on the basis of the voltage in the primary side electric path 22 of the protective instrument 16 and the secondary side electric paths 23 and 24, the electric power is supplied to the distribution board 11 side from the storage battery 13 only when the voltage is not detected in the primary side electric path 22 of the protective instrument 16, that is, the electric power is not able to be supplied to the distribution board 11 side from the storage battery 13, and the electric power is able to be suitably supplied to the distribution board 11 side from the storage battery 13 according to the factor causing the cutoff of the electric power when the voltage is not detected in the secondary side electric paths 23 and 24 of the protective instrument 16 which is a case where the electric power is cut off by a protective operation of the protective instrument 16.

In addition, when the voltage is detected in the primary side electric path 22 of the protective instrument 16, and the voltage is not detected in the secondary side electric paths 23 and 24 of the protective instrument 16, it is determined that the protective instrument 16 has been operated, and the electric power is not supplied to the distribution board 11 side from the storage battery 13, and then the notification unit 34 notifies that the electric power is not supplied. Therefore, it is possible to prevent the electric power from being supplied to the distribution board 11 side from the storage battery 13 without removing the factor causing the cutoff of the electric power, and it is possible to restore the protective instrument 16 by removing the factor causing the cutoff.

In addition, the storage battery system 10 is able to be applied to the existing distribution board 11 in the residence.

Furthermore, in the distribution board 11 which does not use the limiter 17, the protective instrument 16 is the main breaker 18, and the electric power is supplied to the distribution board 11 side from the storage battery 13 only when the voltage is not detected in the primary side electric path 22 of the main breaker 18.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### REFERENCE SIGNS LIST

- 10: storage battery system
- 11: distribution board
- 13: storage battery
- 16: protective instrument
- 21: branch breaker
- 22: primary side electric path
- 23 and 24: secondary side electric path
- 33: control unit
- 34: notification unit
- CT1, CT2, and CT3: voltage sensor as voltage detection unit

## Claims

1. A storage battery system, comprising:
a voltage detection unit detecting a voltage in a primary side electric path of a protective instrument of a distribution board into which commercial AC electric power is input, and in a secondary side electric path of the protective instrument to which a branch breaker is connected, respectively;
a storage battery enabling electric power to be supplied to the distribution board side; and
a control unit supplying the electric power to the distribution board side from the storage battery on the basis of a voltage detection by the voltage detection unit only when the voltage is not detected in the primary side electric path of the protective instrument.

2. The system according to Claim 1, further comprising:
a notification unit,
wherein the control unit controls the electric power such that it is not supplied to the distribution board side from the storage battery, and the notification unit notifies that the electric power is not supplied to the distribution board side from the storage battery when the voltage is detected in the primary side electric path of the protective instrument, and the voltage is not detected in the secondary side electric path of the protective instrument.
